Europäisches Patentamt

European Patent Office

Office européen des brevets

(11) Numéro de publication: **0 283 813 B1**

# FASCICULE DE BREVET EUROPEEN

(45) Date de publication de fascicule du brevet:
**15.01.92**

(21) Numéro de dépôt: **88103496.1**

(22) Date de dépôt: **07.03.88**

(51) Int. Cl.$^5$: **H01M 6/10**

(54) **Procédé de fabrication d'un générateur électrochimique à électrolyte alcalin et à électrodes enroulées en spirale.**

(30) Priorité: **12.03.87 FR 8703391**

(43) Date de publication de la demande:
**28.09.88 Bulletin 88/39**

(45) Mention de la délivrance du brevet:
**15.01.92 Bulletin 92/03**

(84) Etats contractants désignés:
**DE FR GB SE**

(56) Documents cités:
WO-A-79/00229          DE-A- 2 153 533
FR-A- 2 251 106          GB-A- 419 821
GB-A- 1 165 900          US-A- 3 655 456
US-A- 4 099 401          US-A- 4 402 784

PATENT ABSTRACTS OF JAPAN, vol. 10, no. 20 (E-376)[2077], 25 janvier 1986, page 25 E 376; & JP-A-60 180 070 (SHINKOUBE DENKI K.K.) 13-09-1985

(73) Titulaire: **Société Anonyme dite SAFT**
**156, avenue de Metz**
**F-93230 Romainville(FR)**

(72) Inventeur: **Freluche, Jean-Pierre**
**30, rue Waldeck Rousseau**
**F-16000 Angouleme(FR)**

(74) Mandataire: **Weinmiller, Jürgen et al**
**Lennéstrasse 9 Postfach 24**
**W-8133 Feldafing(DE)**

## Description

La présente invention concerne un procédé de fabrication d'un générateur électrochimique à électrolyte alcalin et à électrodes enroulées en spirale, par exemple un accumulateur nickel-cadmium.

Ce procédé consiste à superposer une électrode positive, un séparateur, une électrode négative, et un autre séparateur, les deux séparateurs pouvant être les deux brins d'un même séparateur, à enrouler ces éléments autour d'un noyau pour obtenir ainsi un bobineau, et ensuite introduire ce bobineau dans un godet qui constituera la borne négative du générateur.

A la fin de l'opération d'enroulement, il faut éviter un relachement trop important des spires du bobineau pour pouvoir l'introduire dans le godet.

Un premier procédé connu consiste à fretter le bobineau à la fin de l'opération d'enroulement, à l'aide d'un ruban adhésif par exemple, puis à introduire le tout dans le godet. L'inconvénient majeur de ce procédé réside dans le fait que ces frettes sont introduites à demeure dans le générateur et il n'est plus possible de les enlever.

Dans le brevet américain US-A- 4 099 401 on fixe la dernière spire de l'enroulement à la précédente au moyen d'un ruban adhésif double face. Toutes les techniques de liaison par ruban adhésif présentent des inconvénients intrinsèques. D'une part il est nécessaire d'arrêter périodiquement la machine à spiraler pour remettre un rouleau de ruban d'adhésif neuf. D'autre part l'opération de pose d'un ruban adhésif manque de fiabilité car ce ruban peut se plisser, adhérer à lui-même, adhérer à certaines pièces de la machine etc...

De plus ce mode de mise en oeuvre qui nécessite une opération de déroulage du ruban d'adhésif, puis une coupe, et un accostage du morceau de ruban, est incompatible avec une cadence de fabrication rapide des bobineaux, moins d'une seconde par bobineau par exemple.

Un deuxième procédé connu, qui permet de supprimer la frette, consiste à introduire le bobineau, après spiralage, dans une bague de transfert, puis à approcher la bague du godet pour introduire le bobineau dans le godet, la partie non encore introduite dans ce godet étant maintenue par la bague. Ce procédé permet d'introduire le bobineau directement dans le godet, mais l'utilisation de cette bague crée, après spiralage, une opération supplémentaire qui nécessite un matériel important.

Dans un troisième procédé décrit dans le brevet américain US-A- 4 402 784 des organes de thermosoudage viennent, en fin de spiralage, au contact de la surface extérieure du bobineau, afin de lier la dernière spire de séparateur à la spire antérieure. Ce procédé présente également plusieurs inconvénients. Chaque opération de soudure nécessite un temps d'arrêt de la machine, et un temps de fusion d'une bande de séparateur, dont la durée est comprise sensiblement entre 0,4 seconde et 1 seconde. Ceci pénalise fortement la cadence de l'opération. Par ailleurs, il est nécessaire de permettre l'accessibilité d'un outil de soudure au centre de la machine à spiraler, ce qui est extrêmement difficile à cause de la présence des organes de maintien du bobineau. De plus il est indispensable de respecter un angle bien précis de mise en place des différents éléments pour obtenir une réalisation répétitive de la thermosoudure. Enfin il y a un risque de collage du séparateur sur les électrodes de soudure.

Le procédé de la présente invention permet de supprimer la frette tout en se dispensant d'une opération supplémentaire après spiralage, freinant le procédé de fabrication.

Ce procédé permet également de supprimer tout relachement des spires avant introduction dans le godet, et permet d'avoir le choix entre le relachement ou le non-relachement des spires après introduction, selon le générateur, de puissance ou d'énergie, que l'on souhaite obtenir.

La présente invention a pour objet un procédé de fabrication d'un générateur électrochimique à électrolyte alcalin et à électrodes enroulées en spirale, consistant à superposer quatre éléments, une électrode positive, un séparateur, une électrode négative et un autre séparateur, les deux séparateurs pouvant être les deux brins d'un même séparateur, à enrouler ces quatre éléments autour d'un noyau afin d'obtenir un bobineau, et à introduire ce bobineau dans le godet du générateur, caractérisé en ce que, préalablement à l'opération d'enroulage proprement dite, on dépose sur une extrémité de l'un desdits éléments une colle thermofusible non soluble dans ledit électrolyte alcalin, de manière qu'à la fin de ladite opération d'enroulage, ladite extrémité dudit élément vienne se fixer sur la spire précédente de ce même élément. Cette colle ne contient pas de résines naturelles ou synthétiques, mais un mélange de cire de polyoléfine et d'un copolymère de polyoléfine.

Selon un premier mode de réalisation, on fixe un séparateur sur lui-même et on maintient le collage après introduction du bobineau, cette mesure étant particulièrement adaptée à un générateur de puissance.

Selon un deuxième mode de réalisation, on fixe l'électrode négative sur elle-même et on supprime le collage après introduction du bobineau, pour permettre un bon contact de l'électrode négative avec le godet, cette mesure étant particulièrement adaptée à un générateur d'énergie.

Il est décrit ci-après, à titre d'exemple et en référence aux dessins annexés, un procédé de fabrication selon l'invention.

La figure 1 montre un générateur électrochimique à électrodes enroulées en spirale.

La figure 2 montre le premier mode de réalisation du procédé de l'invention.

La figure 3 montre le deuxième mode de réalisation du procédé de l'invention.

La figure 4 montre très schématiquement une installation permettant la mise en oeuvre du procédé selon l'invention.

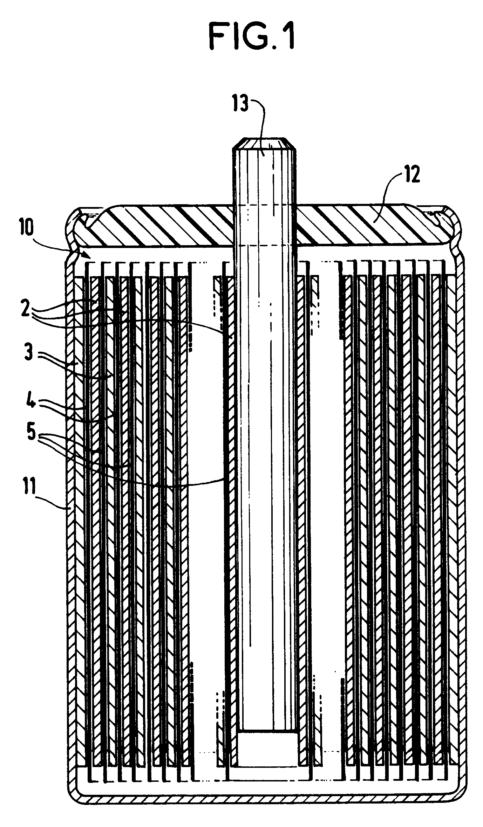

Le générateur de la figure 1 comporte un godet cylindrique 11, contenant un bobineau 10 enroulé autour d'un noyau 13, ce godet étant fermé par un couvercle 12. La traversée du couvercle 12 par le noyau 13 est ici schématiquement représentée.

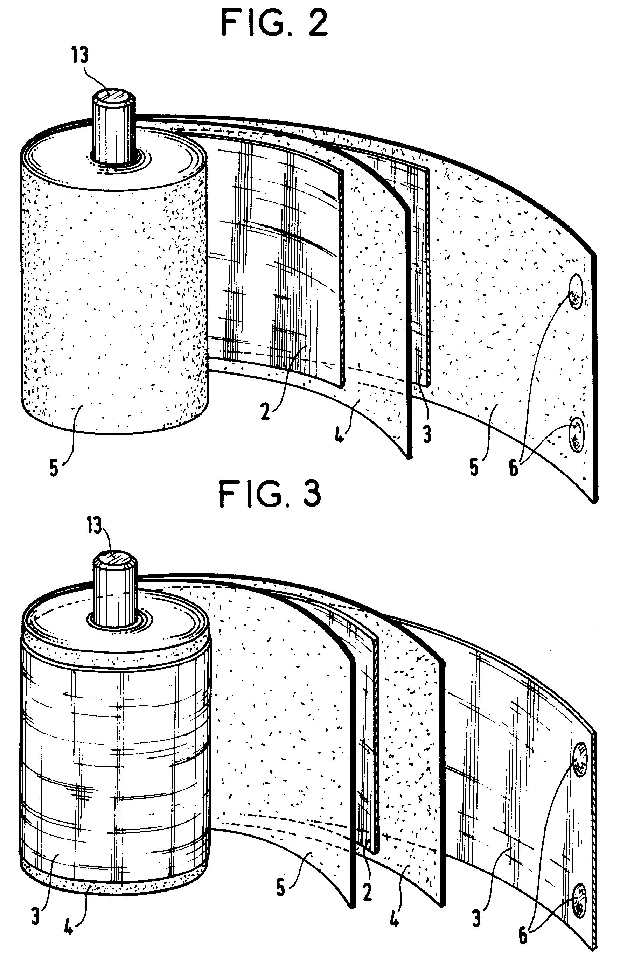

Ce bobineau 10 est constitué d'une électrode positive 2, d'un séparateur 4, d'une électrode négative 3 et enfin d'un autre séparateur 5. Pour obtenir la disposition de ces quatre éléments telle que représentée dans cette figure, il faut bien entendu empiler ces éléments dépliés et dans l'ordre décrit auparavant, puis les enrouler autour du noyau 13, l'électrode positive étant enroulée autour de ce noyau 13. Ce procédé d'enroulement est bien visible en figure 2 et l'on comprend alors que les deux électrodes sont toujours séparées par l'un des séparateurs.

Dans cette figure 2, on voit le noyau 13 et l'extrémité des quatre éléments enroulés, à savoir, l'électrode positive 2, le séparateur 4, l'électrode négative 3 et le séparateur 5 qui constitue la dernière spire.

Deux points de colle 6 thermofusible non soluble dans un électrolyte alcalin tel que la potasse, sont placés sur la face interne du séparateur 5, et l'enroulement complet des éléments va amener l'extrémité du séparateur 5, légèrement plus long que les autres éléments, en contact avec lui-même, les points de colle 6 assurant alors le non-déroulement des spires.

A titre d'exemple, la colle utilisée ne comporte pas de résines naturelles ou synthétiques mais un mélange de cire de polyoléfine et d'un copolymère de polyoléfine. La solubilité d'ùn échantillon d'une telle colle en immersion dans un électrolyte alcalin 8,7 N à 70°C pendant sept jours doit être inférieure à 2% en poids.

Dans la figure 3, c'est l'électrode négative 3 qui joue le rôle de l'élément extérieur, ceci étant obtenu en prévoyant un séparateur 5 plus court d'environ un tour. L'enroulement complet amène la dernière spire de l'électrode négative 3 en contact avec elle-même, les points de colle assurant le non-déroulement des spires.

Quel que soit le mode de réalisation, le procédé de l'invention se déroule de la manière suivante :

on superpose les quatre éléments, en prévoyant des longueurs adaptées soit au premier mode, soit au deuxième mode, on pose les points de colle 6 à l'extrémité du séparateur 5 ou de l'électrode négative 3, on enroule ces éléments autour du noyau 13 jusqu'à ce que la dernière spire soit fixée sur elle-même, puis on introduit le bobineau ainsi formé dans le godet 11.

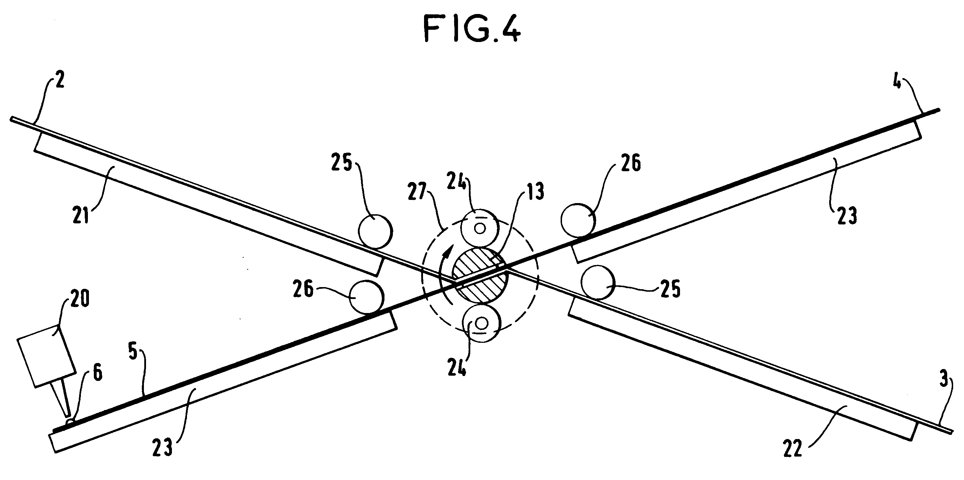

On voit dans la figure 4 illustrée très schématiquement l'installation permettant l'enroulement des spires et la mise en place de la colle.

On a représenté le noyau 13, le guide 21 de l'électrode positive 2, le guide 22 de l'électrode négative 3, les guides 23 des séparateurs 4 et 5. Les références 24, 25, 26 correspondent à des galets presseurs s'exerçant respectivement sur le bobineau 27 en train de se former, sur les électrodes 2 et 3 et sur les séparateurs 4 et 5.

Le distributeur de colle 20 est situé en dehors de la zone de bobinage proprement dite; il ne pose aucun problème d'encombrement, alors qu'un dispositif de thermosoudure devrait être à proximité immédiate du bobineau 27.

Le distributeur 20 projette à distance une petite quantité de colle sur le séparateur 5 et n'a donc aucun contact direct avec ce dernier. L'opération peut s'effectuer, avant l'opération de spiralage proprement dite, pendant l'avance des galets presseurs, c'est-à-dire qu'èlle ne nécessite aucun allongement du tremps de cycle, ni un arrêt en position précise du bobineau en fin de bobinage.

Selon le premier mode d'utilisation adapté au générateur de puissance, le collage n'est pas détruit de sorte que la distance inter-électrode reste constante. On obtient ainsi une meilleure densité de courant, et le non-relâchement du bobineau permet d'enrouler une longueur plus importante d'électrodes.

Selon le deuxième mode d'utilisation adapté au générateur d'énergie, le collage est détruit par un moyen quelconque (mécanique, thermique, chimique) de sorte que les spires se relâchent et notamment la dernière spire de l'électrode négative qui vient s'appuyer sur la face interne du godet.

## Revendications

1. Procédé de fabrication d'un générateur électrochimique à électrolyte alcalin et à électrodes enroulées en spirale, consistant à superposer quatre éléments, une électrode positive (2), un séparateur (4), une électrode négative (3) et un autre séparateur (5), les deux séparateurs pouvant être les deux brins d'un même séparateur, à enrouler ces quatre éléments autour d'un noyau (13) afin d'obtenir un bobineau (10), et à introduire ce bobineau dans le godet (11) du générateur, caractérisé en ce que, préalablement à l'opération d'enroulage proprement dite, on dépose sur une extrémité de l'un desdits éléments une colle thermofusible non soluble dans ledit électrolyte alcalin, de manière qu'à la fin de ladite opération d'enroulage, ladite extrémité dudit élément vienne se fixer sur la spire précédente de ce même élément.

2. Procédé selon la revendication 1, caractérisé en ce que l'on fixe un séparateur (5) sur lui-même.

3. Procédé selon la revendication 2, caractérisé en ce que l'on maintient le collage après introduction du bobineau dans le godet (11).

4. Procédé selon la revendication 1, caractérisé en ce que l'on fixe l'électrode négative (3) sur elle-même.

5. Procédé selon la revendication 4, caractérisé en ce que l'on supprime le collage après introduction du bobineau dans le godet (11), pour permettre un bon contact de l'électrode négative avec la face interne du godet.

6. Procédé selon l'une des revendications précédentes, caractérisé en ce que la colle thermofusible est constitué d'un mélange de cire de polyoléfine et d'un copolymère de polyoléfine.

## Claims

1. A method of manufacturing an electrochemical cell having an alkaline electrolyte and spiral-wound electrodes, the method consisting in superposing four items: a positive electrode (2), a separator (4), a negative electrode (3), and another separator (5), with the two separators optionally being two lengths of a common separator, in winding these four items around a core (13) in order to obtain a roll (10), and in inserting said roll in the can (11) of the cell, characterized in that prior to the winding operation per se, a hot melt glue which is not soluble in said alkaline electrolyte is deposited on one end of one of said elements, so that at the end of said winding operation, said end of said element is fixed on the preceding turn of the same element.

2. A method according to claim 1, characterized in that one of the separators (5) is fixed to itself.

3. A method according to claim 2, characterized in that the glue (6) is kept in place after the roll has been inserted into the can (11).

4. A method according to claim 1, characterized in that the negative electrode (3) is fixed to itself.

5. A method according to claim 4, characterized in that the glue is removed after the roll has been inserted in the can (11) in order to provide good contact between the negative electrode and the inside face of the can.

6. A method according to one of the preceding claims, characterized in that the hot melt glue consists of a mixture of polyolefin wax and of a polyolefin copolymer.

## Patentansprüche

1. Verfahren zur Herstellung eines elektrochemischen Generators mit alkalischem Elektrolyten und spiralförmig gewickelten Elektroden, wobei dieses Verfahren darin besteht, vier Elemente übereinanderlegen, nämlich eine positive Elektrode (2), einen Separator (4), eine negative Elektrode (3) und einen weiteren Separator (5), wobei die beiden Separatoren zwei Zweige eines gleichen Separators sein können, diese vier Elemente um einen Kern (13) zu wickeln, um einen Wickel (10) zu erhalten, und diesen Wickel in den Becher (11) des Generators einzuführen, dadurch gekennzeichnet, daß vor dem eigentlichen Aufwickelvorgang auf ein Ende eines dieser Elemente ein in diesem alkalischen Elektrolyten nicht löslicher wärmeschmelzbarer Kleber aufgebracht wird, so daß am Ende des Aufwickelvorgangs dieses Ende des Elements sich auf der vorhergehenden Windung dieses selben Elements fixiert.

2. Verfahren nach Anspruch 1, dadurch gekennzeichnet, daß man einen Separator (5) auf sich selbst befestigt.

3. Verfahren nach Anspruch 2, dadurch gekennzeichnet, daß man die Klebung nach der Einführung des Wickels in den Becher (11) beibehält.

4. Verfahren nach Anspruch 1, dadurch gekennzeichnet, daß man die negative Elektrode (3) auf sich selbst befestigt.

5. Verfahren nach Anspruch 4, dadurch gekennzeichnet, daß man die Klebung nach Einführung des Wickels in den Becher (11) entfernt, um einen guten Kontakt zwischen der negativen Elektrode und der Innenseite des Bechers zu ermöglichen.

6. Verfahren nach einem der vorhergehenden Ansprüche, dadurch gekennzeichnet, daß der wärmeschmelzende Kleber aus einer Mischung aus Polyolefinwachs und einem Polyolefincopolymer besteht.

# FIG.1

# FIG. 2

# FIG. 3

FIG.4